# EUROPÄISCHE PATENTSCHRIFT

(11) **EP 0 785 903 B1**
(45) Veröffentlichungstag und Bekanntmachung des Hinweises auf die Patenterteilung: **03.07.2002**
(21) Anmeldenummer: 95933333.7
(22) Anmeldetag: 12.10.1995
(51) Int. Cl.: B66C 23/00, B66C 1/20, B66F 7/22

(54) **HUB-DREH-VORRICHTUNG ZUR AUFNAHME EINES KRAFTFAHRZEUGES**
LIFTING-ROTATING DEVICE FOR PICKING UP A MOTOR VEHICLE
DISPOSITIF ELEVATEUR ET ROTATIF POUR ENLEVER UN VEHICULE A MOTEUR

(30) Priorität: 14.10.1994 DE 4436715
(43) Veröffentlichungstag der Anmeldung: 30.07.1997
(60) Teilanmeldung: 98116922.0
(73) Patentinhaber: AGR Abfallentsorgungs-Gesellschaft Ruhrgebiet mbH, 45127 Essen (DE)
(72) Erfinder: KLÖCKNER, Lothar, D-46286 Dorsten (DE); DENSTORF, Andreas, D-44319 Dortmund (DE)
(74) Vertreter: Vomberg, Friedhelm, Dipl.-Phys.
(86) Internationale Anmeldenummer: DE9501404
(87) Internationale Veröffentlichungsnummer: WO9611874

(56) Entgegenhaltungen:
- EP-A- 0 069 991
- EP-A- 0 544 342
- CH-A- 603 475
- DE-A- 4 143 251
- DE-U- 8 903 207

## Beschreibung

Die Erfindung betrifft eine Hub-Dreh-Vorrichtung zur Aufnahme eines Kraftfahrzeuges, insbesondere Pkw, mit einem an einer Säule oder einem Rahmengestell um eine Horizontale schwenkbar angelenkten Parallelogrammausleger, an dessen freiem Ende eine Auslegerspitze derart angelenkt ist, daß sie bei um eine Horizontale ausführbaren Schwenkbewegungen des Parallelogrammauslegers ihre eingestellte Winkelneigung zur Horizontalen beibehält, und mit einer Klemmvorrichtung am freien Ende der Auslegerspitze, die relativ zur Auslegerspitze um eine Horizontale drehbar an der Auslegerspitze angelenkt ist, wobei der Parallelogrammausleger mittels eines Hubzylinders schwenkbar ist, der mit seinem ersten Ende an der Säule oder dem Rahmengestell und mit seinem anderen Ende an dem Parallelogrammausleger außerhalb der Schwenkachse angelenkt ist.

Eine Vorrichtung zum Heben und Bewegen von Lasten mit eine parallelogrammartigen Hebelgestänge, an dessen einem Ende ein doppelseitig beaufschlagtes Kolbenzylinderaggregat den Lastarm, belastet oder unbelastet, im Gleichgewicht hält, und an dessen anderem Ende ein Steuergriff angeordnet ist, wird in der CH-A-603 475 beschrieben. Das Parallelogrammgestänge ist so ausgebildet, daß es die Last über den gesamten Arbeitsbereich in der gleichen Lage halten kann. Die drehbar befestigte Aufnahme zur Last beinhaltet einen Pneumatikzylinder, mit welchen die Last von der Horizontalen in eine Vertikale oder umgekehrt geschwenkt werden kann.

Die EP 0 069 991 A2 beschreibt ein Hebezeug zum manuellen Bewegen von Lasten in drei zueinander senkrechten Richtungen. Der Ausleger dieses Hebezeuges ist an einem Träger um eine waagerechte Achse schwenkbar gelagert. Das Kraftmoment zum Ausgleichen des Lastmomentes wird von einem Arbeitszylinder erzeugt, dessen Arbeitsdruck bei allen Neigungen des Auslegers durch ein Steuergerät konstant gehalten wird und der mit dem Ausleger und dem Träger an solchen ausgesuchten Stellen gelenkig verbunden ist, daß die beim Schwenken des Auslegers verursachte Differenz zwischen Lastmoment und Kraftmoment von einer Bedienungsperon manuell beherrschbar ist. Der Ausleger ist mit einem Lastaufnahmemittel relativ zu diesem gegen eine Rückstellkraft nach oben bewegbar verbunden. Durch diese Relativbewegung wird das Steuergerät zum Einstellen des der Last angepaßten Arbeitsdruckes im Arbeitszylinder gesteuert. Um beim Abfallen der Last oder Versagen des Arbeitszylinders den Ausleger zu blockieren, dienen Sicherheitsgurte.

Die DE 41 43 251 A1 beschreibt eine Vorrichtung zur Demontage von Pkw, die Transportschlitten mit wenigstens einem Paar von Halteklauen besitzt, die entlang jeweils eines quer zum Pkw in der Nähe des Bodens querverlaufenden Tragarmes relativ zueinander bewegt werden können. Jede Halteklaue weist wenigstens eine gegen die Pkw vorstehende Spitze oder Kante auf, die in den Schweller des Pkw oder einen bezüglich des Tragarmes gegenüberliegenden Freiraum in der Pkw-Karosserie eindringt und dadurch den Pkw formschlüssig auf den Transportschlitten festlegt. Die Tragarme sind um eine parallel zur Fahrzeug-Längsrichtung liegende Achse um wenigstens etwa 90° mittels eines Hydraulikzylinders gegenüber dem Grundgestell des Transportschlittens verschwenkbar, so daß der aufgespannte Pkw mit senkrecht stehender Bodengruppe über dem Transportschlitten steht.

Schon aus Gründen des Umweltschutzes aber auch in dem Bestreben, möglichst viele Teile von ausgemusterten Kraftfahrzeugen zu recyceln ist es notwendig, Kraftfahrzeuge soweit wie möglich zu demontieren, um die recycelbaren Teile separieren und jeweiligen Wiederverwertungsmöglichkeiten zuführen zu können.

Anders als beim Zusammenbau von Neufahrzeugen, die auf einer Transferstraße hängend oder auch auf einer Palette stehend von einer Arbeitsstation zur nächsten ohne Gefahr für das Arbeitspersonal führbar sind, sind jedoch der Automatisierung beim Zerlegen von Altfahrzeugen Grenzen gesetzt, da sich unter den zu demontierenden Automobilen auch solche befinden, die unfallbedingt verformt oder altersbedingt derart stark korrodiert sind, daß eine weitgehend automatisierte Demontage nicht mehr möglich ist. Insbesondere behindern abfallender Schmutz oder Rost die Demontage bei Überkopfarbeiten. Um hier Abhilfe zu schaffen, ist es wünschenswert, Hubeinrichtungen zu schaffen, die das Fahrzeug nicht nur heben, sondern auch soweit in arretiertem Zustand drehen können, daß bodenseitige Bereiche von der Seite her zugänglich sind. Herkömmliche Hub-Dreh-Vorrichtungen mit einem schwenkbaren Greifmechanismus sind im Regelfall nicht zum Heben und Drehen von Kraftfahrzeugen geeignet.

Aufgabe der Erfindung ist es, eine Hub-Dreh-Vorrichtung der eingangs genannten Art zu schaffen, die einfach und robust aufgebaut und leicht handhabbar ist.

Diese Aufgabe wird durch die im Anspruch 1 beschriebene Hub-Dreh-Vorrichtung gelöst. Sie besitzt einen an einer Säule oder einem Rahmengestell um eine Horizontale schwenkbar angelenkten Parallelogrammausleger, an dessen freiem Ende eine Auslegerspitze derart angelenkt ist, daß sie bei um eine Horizontale ausgeführten Schwenkbewegungen des Parallelogrammauslegers ihre eingestellte Winkelneigung zur Horizontalen beibehält. Am freien Ende der Auslegerspitze ist eine Klemmvorrichtung relativ zur Auslegerspitze um eine Horizontale drehbar angelenkt. Die Klemmvorrichtung besteht aus einer Platte, an deren gegenüberliegenden Seiten Hubzylinder angeordnet sind, deren freie relativ zur Platte verfahrbaren Enden eine Öse zum Durchschieben einer gemeinsamen Hubstange aufweisen. In diesem Fall wird die Platte auf das Kfz-Dach abgesenkt, anschließend werden die Hubzylinder heruntergefahren, so daß deren Ösen jeweils mit ihren Öffnungen in einer Ebene liegen, so daß eine gemeinsame Hubstange pro gegenüberliegendem Hubzylinderpaar durchgesteckt werden kann. Anschließend werden die Hubzylinder wieder an die Platte herangefahren, so daß die Hubstange das Kfz-Dach gegen die besagte Platte drückt. Der Vorteil der erfindungsgemäßen Hub-Dreh-Vorrichtung liegt darin, daß bei einem Verschwenken des Parallelogrammauslegers das an der Klemmvorrichtung arretierte Kraftfahrzeug seine Winkellage in Querrichtung zur Längsachse beibehält. Das Kraftfahrzeug ist je nach Stellung der Klemmvorrichtung zur Auslegerspitze um Winkel von mindestens 90° in bezug auf eine horizontale Drehachse schwenkbar. Der Schwenkwinkel wird lediglich durch die Parallelogrammausleger zur einen Drehseite hin und durch die Auslegerspitze zur anderen Seite hin beschränkt. Vorzugsweise beträgt der Drehwinkel 105°.

Der Parallelogrammausleger ist mittels eines Hubzylinders schwenkbar, wobei der Hubzylinder bei einem als einarmigem Hebel ausgebildeten Ausleger auf derselben Seite, wo sich die Auslegerspitze, die Klemmvorrichtung und das Kraftfahrzeug befinden, angreift oder bei Ausbildung eines Parallelogrammauslegers in Form eines zweiarmigen Hebels der Hubzylinder auf der entsprechend entgegengesetzten Seite angreift. In jedem Falle besitzt der Parallelogrammlenker einen an der Säule oder dem Rahmengestell anordneten Drehpunkt mit einer horizontal liegenden Drehachse. Der Hubzylinder ist ferner mit seinem ersten Ende an der Säule oder dem Rahmengestell - etwa im Fußbereich - und mit seinem anderen Ende an dem Parallelogrammausleger außerhalb der Schwenkachse, vorzugsweise an der der Auslegerspitze abgewandten Seite angelenkt. An dieser Seite können zur Unterstützung der Schwenkbewegung bei angehängter Last am Lastarm zusätzliche Gewichte angeordnet oder Aufnahmevorrichtungen für entsprechende Gegengewichte (am Kraftarm) vorhanden sein.

Weiterentwicklungen der Erfindung sind in den Unteransprüchen beschrieben.

Nach einer weiteren Ausgestaltung der Erfindung ist der Parallelogrammlenker zusätzlich vertikal an der Säule oder dem Rahmengestell heb- und senkbar befestigt, d.h., der Anlenkpunkt, um den die Drehbewegung durchgeführt wird, wird in der Höhe verschoben.

Nach einer weiteren Ausgestaltung sind die freien Enden des Auslegers des Parallelogrammauslegers über eine Traverse miteinander verbunden, die zudem als Abstützung eines Hubzylinders dient, dessen anderes, der Abstützung entgegengesetztes Ende mit der Klemmvorrichtung außerhalb des Anlenkpunktes der Auslegerspitze verbunden ist. Über diesen Hubzylinder lassen sich Drehbewegungen der Klemmvorrichtung realisieren, an der das Kraftfahrzeug befestigt ist.

Aus Stabilitätsgründen besteht der Parallelogrammausleger aus jeweiligen Auslegerpaaren, von denen jedes auf gegenüberliegenden Seiten der Säule schwenkbar an der Säule angelenkt ist. Vorzugsweise sind die jeweiligen Auslegerpaare an ihrem freien Ende über eine Traverse miteinander verbunden, so daß sie nur unter jeweils gleichen Schwenkwinkeln betätigbar sind.

Die Hubzylinder sind vorzugsweise Hydraulik- oder Pneumatikzylinder, die ggf. über einen gemeinsamen Antrieb verfügen.

Die geschilderte Vorrichtung ist einfach und robust und damit relativ störunanfällig aufgebaut und leicht zu handhaben.

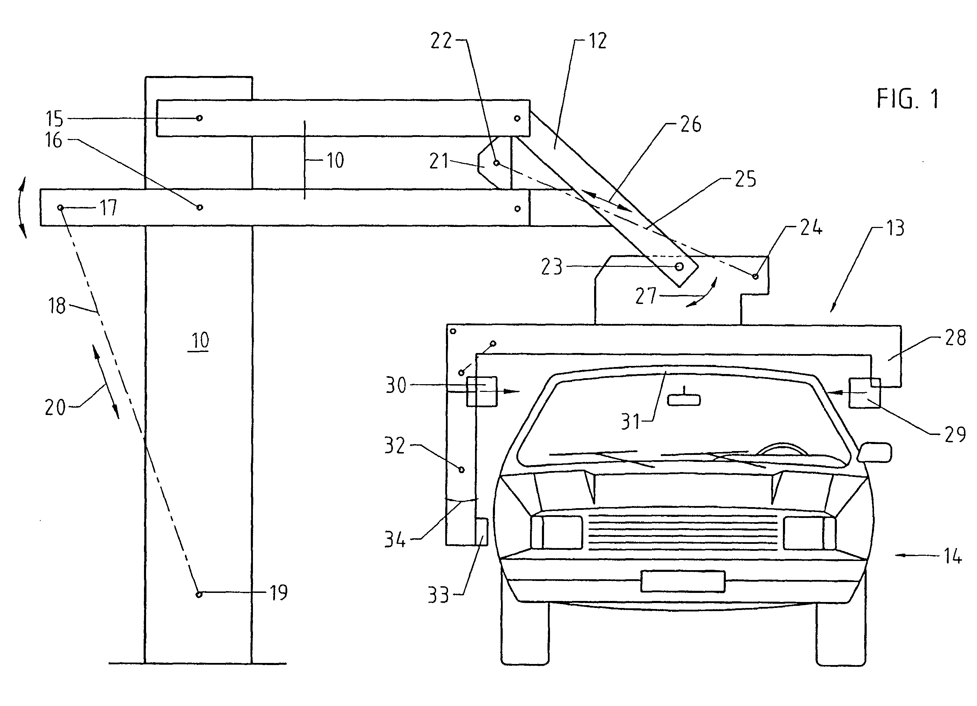

Ausführungsbeispiele der Erfindung sind in den Zeichnungen dargestellt. Es zeigen
- Fig. 1: eine Frontansicht einer Hub-Dreh-Vorrichtung in schematischer Darstellung,
- Fig. 2: eine erfindungsgemäße Ausführungsform einer Hub-Dreh-Vorrichtung in verschiedenen Arbeitsstellungen und
- Fig. 3: eine Draufsicht auf die Vorrichtung nach Fig. 2.

Die wesentlichen Teile der erfindungsgemäßen Hubvorrichtung sind eine vertikale Säule 10, ein Parallelogrammausleger 11, ein an dessen freiem Ende angelenkte Auslegerspitze 12 und eine Klemmvorrichtung 13 zur Befestigung eines Kraftfahrzeuges 14. Der Parallelogrammausleger besteht aus zwei Auslegerarmen, von denen der obere Auslegerarm schwenkbar um eine Achse 15 an der Säule 10 befestigt ist. Der untere Auslegerarm ist schwenkbar um eine Drehachse 16 an der Säule 10 befestigt. Die Schwenkachsen 15 und 16 liegen beabstandet übereinander. Der untere Auslegerarm ist als zweiarmiger Hebel ausgebildet und besitzt an seinem einen Ende einen Anlenkpunkt 17 für einen Hubzylinder 18, dessen anderes Ende im Fußbereich der Säule 10 am Punkt 19 angelenkt ist. Wird der Hubzylinder 18 in der durch Doppelpfeil 20 skizzierten Richtung aus- bzw. eingefahren, schwenkt der Parallelogrammausleger 11 in der durch den Doppelpfeil 20 skizzierten Weise. Am freien Ende des Lastarmes des Parallelogrammauslegers sind die Auslegerarme über eine Traverse 21 zur Aufrechterhaltung des parallelen Abstandes der Auslegerarme miteinander verbunden. Am Parallelogrammausleger 11 ist endseitig eine Auslegerspitze 12 angelenkt, die an ihrem freien, der Säule 10 weiter abgewandten Ende eine Anlenkung für die Klemmvorrichtung 13 besitzt. Zwischen den Anlenkpunkten 22 an der Traverse 21 und einem außerhalb des Anlenkpunktes 23 liegenden Anlenkpunkt 24 an der Klemmvorrichtung ist ein Hubzylinder 25 angeordnet, der in Richtung des Doppelpfeiles 26 aus- und einfahrbar ist. Bei jeweiligen Hubbewegungen wird die Klemmvorrichtung in Richtung des Doppelpfeiles 27 verschwenkt, wobei sie das dort befestigte Fahrzeug 14 mitnimmt. Die dargestellte Klemmvorrichtung, die Gegenstand einer in der parallelen Patentanmeldung (EP 0 887 300) beanspruchten Ausführungsform ist, besitzt ein im Querschnitt U-förmiges Profil 28, das an den freien Enden der jeweiligen Schenkel aus- und einfahrbare Zapfen 29 und 30 aufweist. Diese Zapfen sind soweit ausfahrbar, daß sie das Dach 31 des Kraftfahrzeuges unterfassen können, womit dieses an der Klemmvorrichtung 13 arretiert wird. Seitlich an der Klemmvorrichtung 13 ist ein Abstützarm 32 vorgesehen, der an seinem unteren Ende ein Auflager 33, beispielsweise aus Gummi oder Kunststoff, aufweist.

Diese Abstützarm ist vorzugsweise in Richtung des Doppelpfeiles 34 schwenkbar an der Klemmvorrichtung angelenkt und dient zur Entlastung der Dachholme des eingespannten Fahrzeuges 14 beim Drehvorgang.

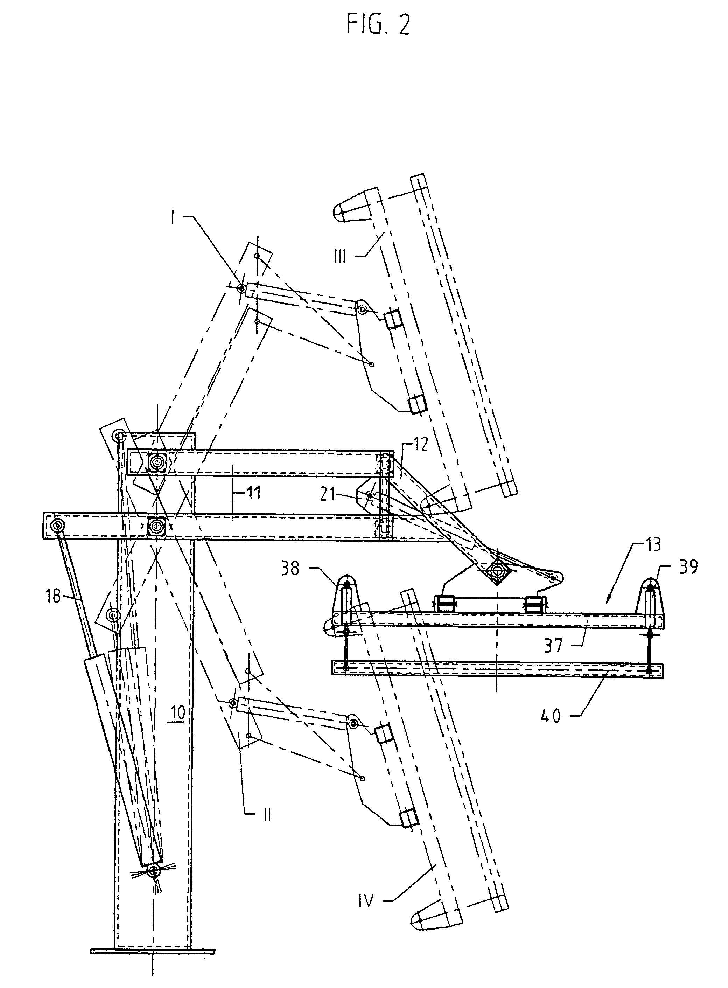

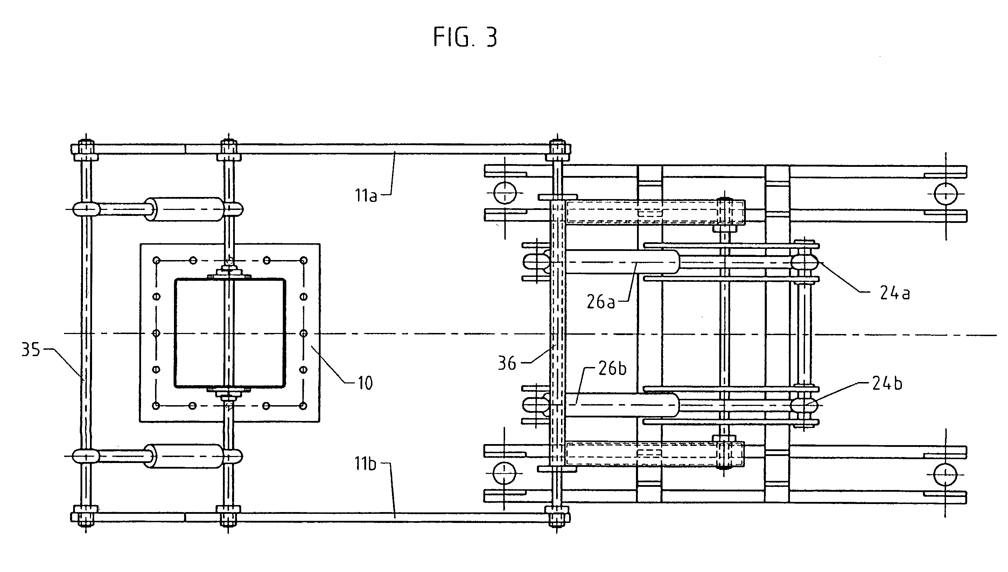

In einer konkreten Ausführungsform nach Fig. 2 und 3 sind, wie aus Fig. 3 ersichtlich, jeweils beidseitig der Säule 10 Parallelogrammausleger 11a und 11b drehbar gelagert. Die Ausleger 11a und 11b sind über Traversen 35 und 36 miteinander verbunden. Die Traverse 36 dient gleichzeitig als Abstützung für Zylinder 26a und 26b, die an die Stelle des vorbeschriebenen Hubzylinders 25 treten. In entsprechender Weise besitzt die Klemmvorrichtung 13 zwei Anlenkpunkte 24a und 24b.

Im Unterschied zu der vorbeschriebenen Vorrichtung besitzt die erfindungsgemäße Klemmvorrichtung 13 eine Platte 37, an deren Enden jeweils Hubzylinder 38 und 39 angebracht sind, die an ihren freien ausfahrbaren Enden Ösen aufweisen, durch die ein Balken 40 schiebbar ist. Zum Arretieren des Kfz-Daches 31 werden die Hubzylinder 38 und 39 ausgefahren, anschließend die Hubstange 40 durch die Ösen geschoben, wonach die Hubzylinder 38 und 39 wieder soweit wie möglich eingefahren werden, bis die Hubstange 40 das Kfz-Dach 31 fest unter die Platte 37 preßt. Bei einer viereckigen Platte 37 werden zweckmäßigerweise mindestens vier Hubzylinder und zwei Hubstangen 40 verwendet. Die Hubvorrichtung arbeitet folgendermaßen: Das Fahrzeug 14 wird zunächst unter der geöffneten Klemmvorrichtung 13 positioniert, was ggf. unter Zuhilfenahme einer Paletten-Rollbahn oder einer andersartigen Transferstraße geschehen kann. Zur Befestigung der Klemmvorrichtung 13 wird die Klemmvorrichtung, d.h. das U-förmige Profil 28 oder die Platte 37, auf das Fahrzeugdach 31 abgesenkt und das Fahrzeugdach unter Zuhilfenahme der Hubstange 40 oder der Zapfen 29 oder 30 an der Klemmvorrichtung 13 befestigt. Das Arretieren des Fahrzeugdaches 31 an der Klemmvorrichtung 13 kann ggf. unter Zuhilfenahme einer Hydraulik, wie im Falle der Hydraulikzylinder 38 und 39 beschrieben, durchgeführt werden. Die Zapfen 29 und 30 können auch als schwenkbare Haken oder ähnliches ausgebildet sein, die nach Verschwenken das Autodach 31 arretierend untergreifen. Grundsätzlich ist es auch möglich, die Klemmvorrichtung mit jeweils schwenkbaren Armen auszustatten, die das Fahrzeug bodenseitig untergreifen und ggf. durch geeignete Hubzylinder fest gegen die Unterseite einer Aufnahmeplatte 37 oder ein Profil 28 pressen. Wesentlich ist eine kraft- und/oder formschlüssige Verbindung des Kraftfahrzeuges 14 mit der Klemmvorrichtung, bevor diese verschwenkt wird. Durch Betätigung der Hubzylinder 18 wird der Parallelogrammausleger 11 aus seiner Horizontallage in die Lage I, bei der das freie Ende des Auslegers 11 angehoben wird oder die Lage II unter Absenkung des freien Endes des Auslegers 11 geführt werden. Bei diesen Schwenkbewegungen des Auslegers 11 ändert das Kraftfahrzeug 14 seine Horizontallage nicht. Wird der Hubzylinder 26 eingefahren, so vollzieht die Klemmvorrichtung 13 eine Drehbewegung um ca. 105°, bis sie die Stellung III einnimmt. Hierbei wird das Kraftfahrzeug in entsprechender Weise verschwenkt, so daß das Kraftfahrzeug um seine Längsachse um 105° gedreht wird. Bei anschließendem Absenken der Auslegerspitzen von der Stellung I zu II bleibt diese Lage entsprechend Positionsdarstellung IV beibehalten, so daß der Bediener der Hub-Dreh-Vorrichtung das Kraftfahrzeug in die gewünschte Höhenlage ohne Veränderung des über den Hubzylinder 26 eingestellten Drehwinkels. Sämtliche Hubzylinder oder sonstige Schwenkbewegungen einleitende Teile werden vorzugsweise hydraulisch oder pneumatisch ausgeführt.

Die Vorteile der erfindungsgemäßen Hub-Dreh-Vorrichtung liegen insbesondere darin, daß alle am Fahrzeug in Überkopfarbeit ausgeführten Tätigkeiten nach Drehung des Kfz ergonomisch ausgeführt werden können. Durch Wegfall der Überkopfarbeit erhöht sich die Arbeitssicherheit. Das Fahrzeug ist je nach Drehwinkel und Arretierung an der Klemmvorrichtung allseitig zugänglich, insbesondere der Fahrzeugboden nach Verschwenken des Kraftfahrzeuges um seine Längsachse. Die erfindungsgemäße Vorrichtung kann preiswerter als bisher bekannte Hub-Dreh-Vorrichtungen hergestellt werden und ist für alle Personenkraftwagen, Geländewagen und Kleinbusse ohne zwischenzeitliche Umrüstung anwendbar.

## Patentansprüche

1. Hub-Dreh-Vorrichtung zur Aufnahme eines Kraftfahrzeuges (14), insbesondere Pkw, mit einem an einer Säule (10) oder einem Rahmengestell um eine Horizontale schwenkbar angelenkten Parallelogrammausleger (11), an dessen freiem Ende eine Auslegerspitze (12) derart angelenkt ist, daß sie bei um eine Horizontale ausführbaren Schwenkbewegungen des Parallelogrammauslegers (11) ihre eingestellte Winkelneigung zur Horizontalen beibehält, und mit einer Klemmvorrichtung (13) am freien Ende der Auslegerspitze (12), die relativ zur Auslegerspitze (12) um eine Horizontale drehbar an der Auslegerspitze (12) angelenkt ist, wobei der Parallelogrammausleger mittels eines Hubzylinders (18) schwenkbar ist, der mit seinem ersten Ende an der Säule (10) oder dem Rahmengestell und mit seinem anderen Ende an dem Parallelogrammausleger (11) außerhalb der Schwenkachse (16) angelenkt ist,
**dadurch gekennzeichnet,**
**daß** die Klemmvorrichtung (13) aus einer Platte (37) besteht, an deren gegenüberliegenden Seiten Hubzylinder (38, 39) angeordnet sind, deren freie relativ zur Platte (37) verfahrbaren Enden eine Öse zum Durchschieben einer gemeinsamen Hubstange (40) aufweisen.

2. Hub-Dreh-Vorrichtung nach Anspruch 1, **dadurch gekennzeichnet, daß** der Hubzylinder (18) an der der Auslegerspitze (12) abgewandten Seite angelenkt ist.

3. Hub-Dreh-Vorrichtung nach einem der Ansprüche 1 oder 2, **dadurch gekennzeichnet, daß** der Parallelogrammleger (11) vertikal an der Säule oder dem Rahmengestell heb- und senkbar befestigt ist.

4. Hub-Dreh-Vorrichtung nach einem der Ansprüche 1 bis 3, **dadurch gekennzeichnet, daß** die freien Enden der Ausleger des Parallelogrammauslegers (11) über eine Traverse (21) miteinander verbunden sind, die zudem als Abstützung (22) eines Hubzylinders (25) dient, dessen anderes Ende mit der Klemmvorrichtung (13) außerhalb des Anlenkpunktes (23) der Auslegerspitze (12) verbunden ist.

5. Hub-Dreh-Vorrichtung nach einem der Ansprüche 1 bis 4, **dadurch gekennzeichnet, daß** der Parallelogrammausleger (11) aus jeweiligen Auslegerpaaren (11a, 11b) besteht, von denen jedes auf gegenüberliegenden Seiten der Säule (10) schwenkbar an der Säule (10) angelenkt ist.

6. Hub-Dreh-Vorrichtung nach Anspruch 5, **dadurch gekennzeichnet, daß** die jeweiligen Auslegerpaare (11a, 11b) an ihrem freien Ende über eine Traverse (36) miteinander verbunden sind.

7. Hub-Dreh-Vorrichtung nach einem der Ansprüche 1 bis 6, **dadurch gekennzeichnet, daß** die Hubzylinder (18, 26, 38, 39) Hydraulik- oder Pneumatik-Zylinder sind.

## Claims

1. Lifting-rotating device for picking up a motor vehicle (14), particularly a passenger car, with a parallelogram-shaped extension arm (11) articulated to a column (10) or a frame so as to pivot about a horizontal and to whose free end a jib head (12) is linked so that during the pivoting motions of the parallelogram-shaped extension arm (11) it maintains its set inclination angle with respect to the horizontal, an with a clamping device (13) at the free end of the jib head (12) which is linked to the jib head (12) so that it can rotate about a horizontal with respect to the jib head (12), whereby the parallelogram-shaped extension arm is pivotable by means of a lifting cylinder (18), which is linked with its first end to the column (10) or the frame and with its other end to the parallelogram-shaped extension arm (11) outside the pivoting axis (16) **characterised in that**
the clamping device (13) consists of a plate (37), at whose opposite sides lifting cylinders (38, 39) have been arranged, whose free ends movable with respect to the plate (37) have an eyelet for receiving a common lift rod (40).

2. Lifting-rotating device according to claim 1, **characterised in that** the lifting cylinder (18) is linked to the side facing away from the jib head (12).

3. Lifting-rotating device according to one of claims 1 or 2, **characterised in that** the parallelogram-shaped extension arm (11) is fastened to the column or frame so that it can be raised and lowered vertically.

4. Lifting-rotating device according to one of claims 1 to 3, **characterised in that** the free ends of the extension arms of the parallelogram-shaped extension arm (1) are interconnected by a crossbar (21), which at the same time serves for the support of a lifting cylinder (25), whose other end is connected with the clamping device (13) outside the link point (23) of the jib head (12).

5. Lifting-rotating device according to one of claims 1 to 4, **characterised in that** the parallelogram-shaped extension arm (11) consists of respective extension arm pairs (11a, 11b), each of them being pivotably linked to the column (10) on opposite sides of the column (10).

6. Lifting-rotating device according to claim 5, **characterised in that** the respective extension arm pairs (11a, 11b) are interconnected at their free ends by a crossbar (36).

7. Lifting-rotating device according to one of claims 1 to 6, **characterised in that** the lifting cylinders (18, 26, 38, 39) are hydraulic or pneumatic cylinders.

## Revendications

1. Dispositif élévateur et rotatif destiné à lever un véhicule automobile (14), en particulier une voiture particulière, avec une flèche en parallélogramme (11) qui est articulée sur une colonne (10) ou sur un châssis de manière à pouvoir pivoter autour d'une horizontale et à l'extrémité libre de laquelle une tête de flèche (12) est articulée de telle manière que, lors de mouvements de pivotement de la flèche en parallélogramme (11) qui peuvent être exercés autour d'une horizontale, elle maintient son inclinaison angulaire réglée par rapport à l'horizontale, et avec un dispositif de serrage (13) à l'extrémité libre de la tête de flèche (12), qui est articulé sur la tête de flèche (12) de manière à pouvoir tourner autour d'une horizontale par rapport à la tête de flèche (12), la flèche en parallélogramme étant orientable au moyen d'un cylindre de levage (18) qui est articulé avec sa première extrémité sur la colonne (10) ou sur le châssis et avec son autre extrémité sur la flèche en parallélogramme (11) à l'extérieur de l'axe de pivotement (16),
**caractérisé par le fait**
**que** le dispositif de serrage (13) se compose d'une plaque (37) qui, de ses côtés opposés, est pourvue de cylindres de levage (38, 39) dont les extrémités libres déplaçables par rapport à la plaque (37) présentent un oeillet destiné à recevoir une tige commune de levage (40).

2. Dispositif élévateur et rotatif selon la revendication 1, **caractérisé par le fait que** le cylindre de levage (18) est articulé sur le côté qui montre dans la direction opposée à la tête de flèche (12).

3. Dispositif élévateur et rotatif selon l'une des revendications 1 ou 2, **caractérisé par le fait que** la flèche en parallélogramme (11) est fixée sur la colonne ou sur le châssis de manière à pouvoir être levée et baissée verticalement.

4. Dispositif élévateur et rotatif selon l'une des revendications 1 à 3, **caractérisé par le fait que** les extrémités libres des avant-bras de la flèche en parallélogramme (11) sont reliés l'un à l'autre par l'intermédiaire d'une traverse (21) qui, en outré, sert d'appui (22) d'un cylindre de levage (25) dont l'autre extrémité est reliée au dispositif de serrage (13) à l'extérieur du point d'articulation (23) de la tête de flèche (12).

5. Dispositif élévateur et rotatif selon l'une des revendications 1 à 4, **caractérisé par le fait que** la flèche en parallélogramme (11) se compose de paires respectives de flèches (11a, 11b) dont chacune est articulée à pivotement sur la colonne (10) de côtés opposés de la colonne (10).

6. Dispositif élévateur et rotatif selon la revendication 5, **caractérisé par le fait que** les paires respectives de flèches (11a, 11b) sont reliées l'une à l'autre à leur extrémité libre par l'intermédiaire d'une traverse (36).

7. Dispositif élévateur et rotatif selon l'une des revendications 1 à 6, **caractérisé par le fait que** les cylindres de levage (18, 26, 38, 39) sont des cylindres hydrauliques ou pneumatiques.
